# EUROPEAN PATENT SPECIFICATION

(11) **EP 2 623 762 B1**
(45) Date of publication and mention of the grant of the patent: **07.12.2016**
(21) Application number: 11829208.5
(22) Date of filing: 28.09.2011
(51) Int. Cl.: F02M 21/02, F02M 47/04

(54) **GAS INJECTION VALVE**
GASEINSPRITZVENTIL
SOUPAPE D'INJECTION DE GAZ

(30) Priority: 28.09.2010 JP 2010217133
(43) Date of publication of application: 07.08.2013
(73) Proprietor: IHI Corporation, Tokyo 135-8710 (JP)
(72) Inventor: UMEMOTO, Yoshiyuki, Tokyo 101-0041 (JP); YAMADA, Takeshi, Tokyo 135-8710 (JP)
(74) Representative: Lamb, Martin John Carstairs
(86) International application number: PCT/JP2011/072239
(87) International publication number: WO 2012/043655

(56) References cited:
- DE-A1- 2 361 358
- DE-A1-102009 026 756
- JP-A- 2 271 064
- JP-A- 2000 073 769
- JP-A- 2000 161 177
- JP-A- 2009 013 841
- JP-U- H0 250 158
- US-A1- 2010 089 364

## Description

The present invention relates to a gas injection valve.

### [Technical Background]

Two-stroke gas engines that use a fuel gas such as, for example, LNG or the like as their main fuel are one type of internal combustion engine.

In a two-stroke gas engine, when the piston is positioned at bottom dead center, air is taken into the interior of the cylinder liner. After the piston then starts to rise, fuel gas is injected into the interior of the cylinder liner by a gas injection valve, and the air and fuel gas are mixed together. The piston then reaches top dead center, and when the gas mixture formed by the air and the fuel gas reaches maximum compression, liquid fuel is injected from a pilot injection valve towards a combustion chamber that is formed above the cylinder liner. This liquid fuel then self-ignites and causes the gas mixture formed by the aforementioned air and the fuel gas to ignite, thereby generating a premixed combustion.

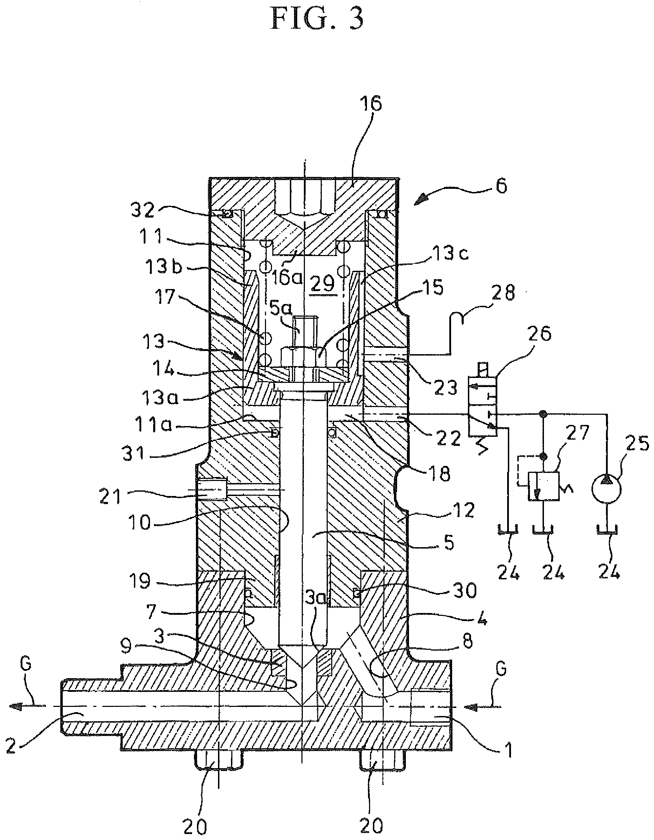

FIG. 3 shows an example of a conventional gas injection valve that is used in a two-stroke gas engine.

This gas injection valve is provided with a gas path component 4, a needle valve 5, and a valve driving apparatus 6.

The gas path component 4 has a gas supply path 1 along which fuel gas G from a fuel gas generating apparatus (not shown) is supplied, and a gas injection path 2 that is used to feed the fuel gas G to the interior of the cylinder liner (not shown) of a two-stroke gas engine. A seat portion 3 in which is formed a circular aperture 3a that is able to communicate with the two paths 1 and 2 is incorporated between the paths 1 and 2.

The needle valve 5 is located coaxially with the aperture 3a above the aperture 3a of the seat portion 3, and a distal end portion thereof that is formed in a conical shape is able to fit inside the aperture 3a.

When fuel injection is halted, the valve driving apparatus 6 causes the needle valve 5 to approach the seat portion 3 such that an outer circumferential surface of the distal end portion of the needle valve 5 is able to be placed firmly against an inside edge portion of the aperture 3a, while when fuel is being injected, the valve driving apparatus 6 causes the needle valve 5 to retire from the seat portion 3 such that a gap is formed between the outer circumferential surface of the distal end portion of the needle valve 5 and the inside edge portion of the aperture 3a.

The aperture 3a of the seat portion 3 penetrates the seat portion 3 in a vertical direction, and a recessed portion 7 is formed in the center of a top portion of the gas path component 4. Moreover, the distal end portion of the needle valve 5, which is formed in a conical shape, faces downwards, and a male screw 5a is formed on an upwardly-facing base end portion of the needle valve 5.

The gas supply path 1 extends horizontally from an end surface on one side (i.e., the right side in FIG. 3) of the gas path component 4 towards the other side (i.e., the left side in FIG. 3) thereof. An end portion of this other side (i.e., the left side in FIG. 3) of the gas supply path 1 communicates with the recessed portion 7 via a first intermediate path 8 that extends diagonally upwards from this end portion.

The gas injection path 2 extends horizontally from an end surface on the other side (i.e., the left side in FIG. 3) of the gas path component 4 towards the one side (i.e., the right side in FIG. 3) thereof. The end portion of this one side (i.e., the right side in FIG. 3) of the gas injection path 2 communicates with the recessed portion 7 via a second intermediate path 9 that extends vertically upwards from this end portion. The internal diameter of a top portion of this second intermediate path 9 is formed larger than the internal diameter of a bottom portion thereof, and the seat portion 3 is fitted inside the top portion of the second intermediate path 9.

In addition, a fuel gas generating apparatus is connected to the end portion on the one side (i.e., on the right side in FIG. 3) of the gas supply path 1, and the end portion on the other side (i.e., on the left side in FIG. 3) of the gas injection path 2 communicates with the interior of the cylinder liner of the two-stroke gas engine.

The valve driving apparatus 6 has an apparatus body 12, a piston 13, a spring bearing 14, a nut 15, a cover 16, and a spring 17.

A needle valve guide hole 10 though which the needle valve 5 is inserted such that it is able to be raised and lowered is formed in a bottom portion of the apparatus body 12, while a piston guide hole 11 whose internal diameter is greater than that of the needle valve guide hole 10 is formed coaxially with the needle valve guide hole 10 in the top portion of the apparatus body 12.

The piston 13 is formed in a circular cylinder shape having one closed end, and is formed by pressure-receiving end 13 a, which forms the closed end portion, and a skirt portion 13b, which forms a side surface. The piston 13 is inserted so as to be able to move inside the piston guide hole 11, and such that the pressure-receiving end 13 a faces downwards while the skirt portion 13b faces upwards. The male screw 5a of the base end portion of the needle valve 5 penetrates the pressure-receiving end 13a from underneath.

The spring bearing 14 is inserted from above into the interior of the skirt portion 13b of the piston 13, and is engaged from the outside with the male screw 5a of the needle valve 5.

The nut 15 screws onto the male screw 5a of the needle valve 5, and thereby fixes the spring bearing 14 and the piston 13 to the needle valve 5.

The cover 16 is screwed onto a top end portion of the apparatus body 12, and closes off the aperture in the top end of the piston guide hole 11.

The spring 17 is housed within the apparatus body 12 so as to be positioned between the cover 16 and the spring bearing 14, and urges the spring bearing 14, the piston 13, and the needle valve 5 downwards.

A hydraulic chamber 18 is formed by the pressure-receiving end 13a of the piston 13, an internal bottom surface 11a of the piston guide hole 11 that lies opposite the pressure-receiving end 13a, and an inner circumferential surface of the piston guide hole 11.

A groove 13c that extends vertically is formed in an outer circumferential surface of the skirt portion 13b of the piston 13 so as to lie opposite the inner circumferential surface of the piston guide hole 11, and so as to reach a top end of the piston 13. In addition, a top end portion of the spring 17 engages from the outside with a projection 16a that is provided on a bottom surface of the cover 16.

A projecting portion 19 that protrudes downwards with the needle valve guide hole 10 at its center is formed in a bottom portion of the apparatus body 12 of the valve driving apparatus 6. The projecting portion 19 is fitted from above inside a top edge portion of an internal circumferential surface of the recessed portion 7 in the gas path component 4, and the gas path component 4 is fixed by bolts 20 to the apparatus body 12.

Moreover, a leakage gas recovery hole 21 that horizontally penetrates the apparatus body 12 from the outside in the direction of the needle valve guide hole 10, an operating hydraulic pressure application hole 22 that horizontally penetrates the apparatus body 12 from the outside in the direction of the hydraulic chamber 18, and an atmospheric opening hole 23 that horizontally penetrates the apparatus body 12 from the outside in the direction of the groove 13c in the outer circumferential surface of the piston 13 are all provided in the apparatus body 12.

The atmospheric opening hole 23 communicates via the groove 13c in the outer circumferential surface of the skirt portion 13b with a space 29 that is enclosed by the inner circumferential surface of the skirt portion 13b, the inner circumferential surface of the piston guide hole 11, and the bottom surface of the cover 16, and the like.

Furthermore, a pump 25, an electromagnetic valve 26, and a relief valve 27 are connected to the operating hydraulic pressure application hole 22. The pump 25 discharges operating oil that has been suctioned from a tank 24. When a solenoid thereof is excited, the electromagnetic valve 26 causes an operating oil discharge aperture of the pump 25 to be in communication with the hydraulic chamber 18 via the operating hydraulic pressure application hole 22, and when the solenoid thereof is not being excited, the electromagnetic valve 26 causes the hydraulic chamber 18 to be in communication with the tank 24 via the operating hydraulic pressure application hole 22. The relief valve 27 is provided in order to return operating oil discharged by the pump 25 to the tank 24 when the solenoid of the electromagnetic valve 26 is not being excited. Moreover, an atmospheric opening tube 28 is connected to the atmospheric opening hole 23.

In FIG. 3, the symbol 30 shows an O-ring that is interposed between an outer circumferential surface of the projecting portion 19 of the apparatus body 12 and an inner circumferential surface of the recessed portion 7 of the gas path component 4, the symbol 31 shows an O-ring that is interposed between an inner circumferential surface of the needle valve guide hole 10 of the apparatus body 12 and the outer circumferential surface of the needle valve 5, and the symbol 32 shows an O-ring that is interposed between a top end surface of the apparatus body 12 and a circumferential edge portion of a bottom end surface of the cover 16.

Next, an operation of the gas injection valve shown in FIG. 3 will be described.

When the solenoid of the electromagnetic valve 26 is not being excited, the operating oil discharged by the pump 25 is not supplied to the hydraulic chamber 18, but is returned to the tank 24 via the relief valve 27. At this time, the hydraulic chamber 18 is in communication with the tank 24 via the operating hydraulic pressure application hole 22 and the electromagnetic valve 26.

The spring bearing 14, the piston 13, and the needle valve 5 are pushed downwards by the elastic force of the spring 17, and the distal end portion (i.e., the bottom end portion in FIG. 3) of the needle valve 5, which is formed in a conical shape, fits inside the aperture 3a of the seat portion 3, and the outer circumferential surface of the distal end portion of the needle valve 5 fits tightly against the inside edge portion of the aperture 3a. As a result, the gas injection valve is placed in a closed state in which the gas supply path 1 and the gas injection path 2 are not in communication with each other.

Accordingly, fuel gas is not supplied from the fuel gas generating apparatus to the interior of the cylinder liner of the two-stroke gas engine.

When the solenoid of the electromagnetic valve 26 is excited, the operating oil discharged by the pump 25 is supplied to the hydraulic chamber 18 via the electromagnetic valve 26 and the operating hydraulic pressure application hole 22. The needle valve 5, the piston 13, and the spring bearing 14 are pushed upwards by the pressure of the operating oil supplied to the hydraulic chamber 18, so that the outer circumferential surface of the distal end portion of the needle valve 5 moves away from the inside edge portion of the aperture 3a of the seat portion 3, and the gas injection valve is placed in a state in which the gas supply path 1 and the gas injection path 2 are in communication with each other.

Accordingly, fuel gas is supplied at a constant injection pressure from the fuel gas generating apparatus to the interior of the cylinder liner of the two-stroke gas engine. Moreover, the spring 17 is compressed in conjunction with the rising of the needle valve 5, the piston 13, and the spring bearing 14.

When the piston 13 is rising, the air inside the space 29 is expelled to the outside of the apparatus body 12 via the groove 13c in the outer circumferential surface of the skirt portion 13b of the piston 13, the atmospheric opening hole 23, and the atmospheric opening tube 28.

While the gas injection valve is in a closed state, then if the excitation of the solenoid of the electromagnetic valve 26 is interrupted, the operating oil being discharged by the pump 25 is returned to the tank 24 via the relief valve 27 without being supplied to the hydraulic chamber 18. Moreover, the hydraulic chamber 18 is in communication with the tank 24 via the operating hydraulic pressure application hole 22 and the electromagnetic valve 26.

The spring bearing 14, the piston 13, and the needle valve 5 are pushed downwards by the elastic force of the spring 17, and the distal end portion (i.e., the bottom end portion in FIG. 3) of the needle valve 5, which is formed in a conical shape, fits inside the aperture 3 a of the seat portion 3, and the outer circumferential surface of the distal end portion of the needle valve 5 fits tightly against the inside edge portion of the aperture 3a, so that the gas injection valve is placed in a closed state in which the gas supply path 1 and the gas injection path 2 are not in communication with each other.

Accordingly, fuel gas is no longer supplied from the fuel gas generating apparatus to the interior of the cylinder liner of the two-stroke gas engine.

When the piston 13 is falling, the operating oil from the hydraulic chamber 18 is returned to the tank 24 via the operating hydraulic pressure application hole 22 and the electromagnetic valve 26. Moreover, air outside the apparatus body 12 is taken into the space 29 via the atmospheric opening tube 28, the atmospheric opening hole 23, and the groove 13c in the outer circumferential surface of the skirt portion 13b of the piston 13.

Note that Patent document 1 (see below) provides prior art document information relating to gas injection valves.

### [Documents of the prior art]

### [Patent documents]

[Patent document 1] Japanese Patent Granted Publication No. 3897311

### [Disclosure of the Invention]

### [Problems to be Solved by the Invention]

In the gas injection valve shown in FIG. 3, in an open state in which the gas supply path 1 and the gas injection path 2 are in communication with each other, if fuel gas is supplied at a constant injection pressure from the fuel gas generating apparatus to the interior of the cylinder liner of the two-stroke gas engine, then in the interior of the cylinder liner, the mixing together of the air and fuel gas is not accelerated, and in some cases it is not possible to maintain the running of the engine efficiently and in a stable state.

Moreover, when fuel gas is being supplied to the interior of the cylinder liner, if the excitation and excitation release of the solenoid of the electromagnetic valve 26 is repeated, so that the injection of fuel gas by the gas injection valve is performed intermittently, the outer circumferential surface of the distal end portion of the needle valve 5 and the inside edge portion of the aperture 3a of the seat portion 3 become abraded within a short period.

The present invention was conceived in view of the above-described circumstances, and it is an object thereof to provide a gas injection valve that makes it possible to vary the injection pressure of fuel gas while the needle valve remains in an open state.

DE 23 61 358 A1 disclosed a gas injection valve with: a gas flow path component that comprises a gas supply path along which fuel gas is supplied, and a gas injection path that is able to feed fuel gas to an interior portion of a cylinder of a gas engine, and also an aperture that located between these paths and is able to communicate with both paths; a valve body that opens and closes the aperture; and a valve driving apparatus that, when fuel injection is halted, causes the valve body to approach the gas path component such that a distal end portion of the valve body closes off the aperture, and that, when fuel is being injected, causes the valve body to retire from the gas path component such that the distal end portion of the valve body opens up the aperture, wherein the valve driving apparatus includes: an apparatus body that supports the valve body such that it is able to move in both a direction in which it approaches the gas path component and a direction in which it retreats from the gas path component; a spring bearing that is attached to the valve body; a piston that is housed in the apparatus body such that it is able to move in the same direction as the valve body; a first spring that urges the spring bearing in a direction approaching the gas path component; and a second spring that is located between the piston and the spring bearing, and that is able to expand and contract in the direction of movement of the valve body.

US 2010/0089364 A1 discloses a gas injection valve for a large bore two stroke engine.

The invention is a gas injection valve according to claim 1.

Preferably, the valve body has a circular column shape, and the piston is formed in a toroidal shape having the same axis as the valve body, and the spring bearing is inserted inside the piston such that it is able to slide in the axial direction of the valve body, and a base end portion of the valve body is attached to the spring bearing.

Alternatively, the valve body may have a circular column shape, and the piston is fitted from an outer side around the valve body such that it is able to slide in the axial direction of the valve body, and a base end portion of the valve body is attached to the spring bearing.

### [Effects of the Invention]

According to the gas injection valve of the present invention, the following superior operation and effects can be demonstrated.
(1) When fluid pressure is applied to the piston, because the outer circumferential surface of the distal end portion of the needle valve moves away from the inside edge portion of the aperture of the seat portion, and the spring bearing and the needle valve are consequently affected by their own mass and by the spring loading of the first and second springs so that they perform a simple harmonic oscillation so that the area of the flow path between the outer circumferential surface of the distal end portion of the needle valve and the inside edge portion of the aperture of the seat portion increases and decreases in accordance with the rising and falling of the needle valve, then even if fuel gas is fed at a constant pressure to a gas supply path, the injection pressure of the fuel gas that is supplied via the gas injection path to the interior of the cylinder liner can be varied, and in the interior of the cylinder liner, the mixing together of the air and the fuel gas is accelerated, and it is possible to maintain the running of the engine efficiently and in a stable state.
(2) Because the injection pressure of the fuel gas can be varied while the needle valve remains in an open state so that the needle valve and the seat portion do not come into mutual contact during fuel injection, the usable lifespan of these components can be considerably extended.

### [Brief description of the drawings]

[FIG. 1] FIG. 1 is a conceptual view showing an example of the gas injection valve of the present invention.
[FIG. 2] FIG. 2 is a conceptual view showing another example of the gas injection valve of the present invention.
[FIG. 3] FIG. 3 is a conceptual view showing an example of a conventional gas injection valve.

### [Embodiments of the Invention]

Embodiments of the present invention will now be described based on the drawings.

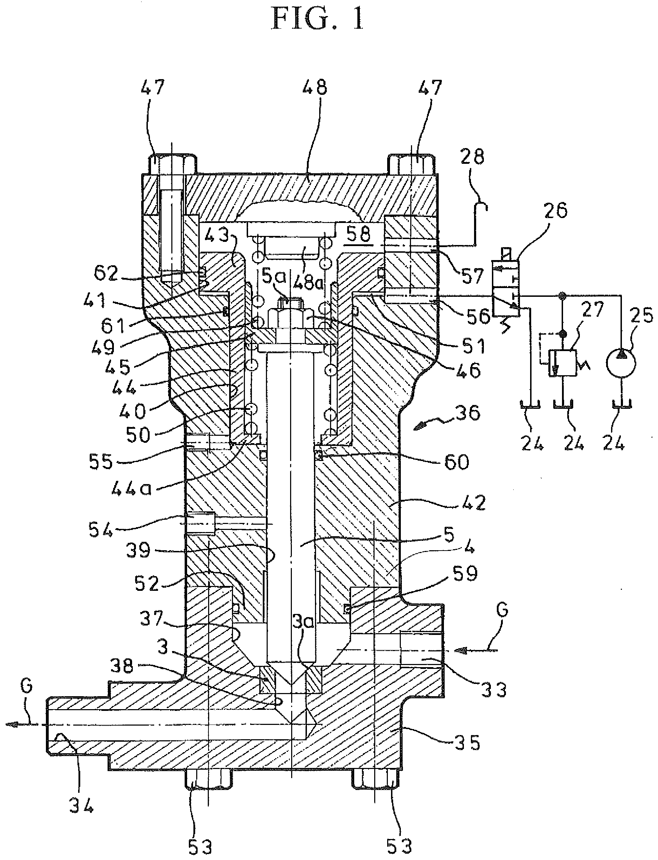

FIG. 1 shows an example of a gas injection valve of the present invention. In this drawing, portions that have the same structure as in FIG. 3 are given the same descriptive symbols as in FIG. 3 and any description thereof is omitted.

This gas injection valve is provided with a gas path component 35, a needle valve (i.e., a valve body) 5 that has the same structure as in FIG. 3, and a valve driving apparatus 36.

The gas path component 35 has a gas supply path 33 along which fuel gas G from a fuel gas generating apparatus (not shown) is supplied, and a gas injection path 34 that is used to feed the fuel gas G to the interior of a cylinder liner (not shown) of a two-stroke gas engine. The seat portion 3 in which is formed the circular aperture 3a that is able to communicate with the two paths 33 and 34 is incorporated between the paths 33 and 34. A recessed portion 37 is also formed in the center of a top portion of the gas path component 35.

When fuel injection is halted, the valve driving apparatus 36 causes the needle valve 5 to approach the seat portion 3 such that an outer circumferential surface of the distal end portion of the needle valve 5 is able to fit firmly against an inside edge portion of the aperture 3a of the seat portion 3, while when fuel is being injected, the valve driving apparatus 36 causes the needle valve 5 to retire from the seat portion 3 such that a gap is formed between the outer circumferential surface of the distal end portion of the needle valve 5 and the inside edge portion of the aperture 3a of the seat portion 3.

The gas supply path 33 extends horizontally from an end surface on one side (i.e., the right side in FIG. 1) of the gas path component 35 towards the other side (i.e., the left side in FIG. 1) thereof. An end portion of this other side (i.e., the left side in FIG. 1) of the gas supply path 33 communicates with the recessed portion 37.

The gas injection path 34 extends horizontally from an end surface on the other side (i.e., the left side in FIG. 1) of the gas path component 35 towards the one side (i.e., the right side in FIG. 1) thereof. The end portion of this one side (i.e., the right side in FIG. 1) of the gas injection path 34 communicates with the recessed portion 37 via an intermediate path 38 that extends vertically upwards from this end portion. The internal diameter of a top portion of this intermediate path 38 is formed larger than the internal diameter of a bottom portion thereof, and the seat portion 3 is fitted inside the top portion of the intermediate path 38.

In addition, a fuel gas generating apparatus is connected to the end portion on the one side (i.e., on the right side in FIG. 1) of the gas supply path 33, and the end portion on the other side (i.e., on the left side in FIG. 1) of the gas injection path 34 communicates with the interior of the cylinder liner of the two-stroke gas engine.

The valve driving apparatus 36 has an apparatus body 42, a toroidal piston 43, a spring bearing 45, a nut 46, a cover 48, a first spring 49, and a second spring 50.

A needle valve guide hole 39 though which the needle valve 5 is inserted such that it is able to be raised and lowered is formed in a bottom portion of the apparatus body 42, while a spring bearing guide hole 40 whose internal diameter is greater than that of the needle valve guide hole 39 is formed coaxially with the needle valve guide hole 39 in an intermediate portion in a vertical direction of the apparatus body 42, and a piston guide hole 41 whose internal diameter is greater than that of the spring bearing guide hole 40 is formed coaxially with the needle valve guide hole 39 in the top portion of the apparatus body 42.

The toroidal piston 43 is inserted inside the piston guide hole 41 such that it is able to move up and down, and a cylindrical piston extension portion 44 that is continuous with the toroidal piston 43 and protrudes downwards coaxially with the toroidal piston 43, and that is inserted inside the spring bearing guide hole 40 such that it is able to move up and down is formed at a bottom end of the toroidal piston 43.

The spring bearing 45 is formed in a circular cylinder shape having one closed end, and is inserted from above inside the piston extension portion 44 such that it is able to move up and down. The spring bearing 45 fits from the outside around the male screw 5a of the needle valve 5 at the end surface thereof that is positioned at the bottom end of the spring bearing 45.

The nut 46 screws onto the male screw 5a of the needle valve 5, and thereby fixes the spring bearing 45 to the needle valve 5.

The cover 48 is fastened by a bolt 47 to a top end portion of the apparatus body 42, and closes off the aperture end of the piston guide hole 41.

The first spring 49 is housed within the apparatus body 42 so as to be positioned between the cover 48 and the spring bearing 45, and urges the spring bearing 45 and the needle valve 5 in a downward direction.

The second spring 50 is housed within the apparatus body 42 so as to be positioned between the spring bearing 45 and the piston extension portion 44, and is able to expand and contract in the axial direction of the needle valve 5.

In addition, a hydraulic chamber 51 is formed by a bottom surface of the toroidal piston 43, an internal bottom surface of the piston guide hole 41 that lies opposite the bottom surface of the toroidal piston 43, and an inner circumferential surface of the piston guide hole 41.

Atop end portion of the first spring 49 engages from the outer side with a projection 48a that is provided on a bottom surface of the cover 48, while a bottom end portion of the second spring 50 engages with a toroidal projection 44a that is formed on an inner circumferential surface of the bottom end portion of the piston extension portion 44.

A projecting portion 52 that protrudes downwards with the needle valve guide hole 39 at its center is formed in a bottom portion of the apparatus body 42 of the valve driving apparatus 36. The projecting portion 52 is fitted from above inside a top edge portion of an inner circumferential surface of the recessed portion 37 in the gas path component 35, and the gas path component 35 is fixed by bolts 53 to the apparatus body 42.

Moreover, a leakage gas recovery hole 54 that horizontally penetrates the apparatus body 42 from the outside in the direction of the needle valve guide hole 39, a leakage operating fluid recovery tube 55 that horizontally penetrates the apparatus body 42 from the outside in the direction of the internal bottom portion of the spring bearing guide hole 40, an operating hydraulic pressure application hole 56 that horizontally penetrates the apparatus body 42 from the outside in the direction of the hydraulic chamber 51, and an atmospheric opening hole 57 that horizontally penetrates the apparatus body 42 from the outside are each provided in the apparatus body 12.

The atmospheric opening hole 57 communicates from the outside with a space 58 that is enclosed by the top portion of the toroidal piston 43, the spring bearing 45, the inner circumferential surface of the piston guide hole 41, and the bottom surface of the cover 48 and the like.

Furthermore, in the same way as in the gas injection valve shown in FIG. 3, the tank 24, the pump 25, the electromagnetic valve 26, the relief valve 27, and the atmospheric opening tube 28 are attached to the valve driving apparatus 36. These components are assembled such that, when the solenoid of the electromagnetic valve 26 is excited, an operating oil discharge aperture of the pump 25 is in communication with the hydraulic chamber 51 via the operating hydraulic pressure application hole 56, and when the solenoid of the electromagnetic valve 26 is not being excited, the hydraulic chamber 51 is in communication with the tank 24 via the operating hydraulic pressure application hole 56.

In FIG. 1, the symbol 59 shows an O-ring that is interposed between an outer circumferential surface of the projecting portion 52 of the apparatus body 42 and an inner circumferential surface of the recessed portion 37 of the gas path component 35, the symbol 60 shows an O-ring that is interposed between an inner circumferential surface of the needle valve guide hole 39 of the apparatus body 42 and the outer circumferential surface of the needle valve 5, the symbol 61 shows an O-ring that is interposed between an inner circumferential surface of the spring bearing guide hole 40 of the apparatus body 42 and the outer piston extension portion 44, and the symbol 62 shows an O-ring that is interposed between an inner circumferential surface of the piston guide hole 41 of the apparatus body 42 and an outer circumferential surface of the toroidal piston 43.

Next, an operation of the gas injection valve shown in FIG. 1 will be described.

When the solenoid of the electromagnetic valve 26 is not being excited, the operating oil discharged by the pump 25 is not supplied to the hydraulic chamber 51, but is returned to the tank 24 via the relief valve 27. At this time, the hydraulic chamber 51 is in communication with the tank 24 via the operating hydraulic pressure application hole 56 and the electromagnetic valve 26.

The spring bearing 45 and the needle valve 5 are pushed downwards by the elastic force of the first spring 49, and the distal end portion (i.e., the bottom end portion in FIG. 1) of the needle valve 5, which is formed in a conical shape, fits inside the aperture 3a of the seat portion 3, and the outer circumferential surface of the distal end portion of the needle valve 5 fits tightly against the inside edge portion of the aperture 3a. As a result, the gas injection valve is placed in a closed state in which the gas supply path 33 and the gas injection path 34 are not in communication with each other.

Accordingly, fuel gas is not supplied from the fuel gas generating apparatus to the interior of the cylinder liner of the two-stroke gas engine. In addition, the spring bearing 45 compresses the second spring 50, and the piston extension portion 44 and the toroidal piston 43 are urged downwards by the elastic force of the second spring 50.

When the solenoid of the electromagnetic valve 26 is excited, the operating oil discharged by the pump 25 is supplied to the hydraulic chamber 51 via the electromagnetic valve 26 and the operating hydraulic pressure application hole 56. The toroidal piston 43 and the piston extension portion 44 are pushed upwards by the pressure of the operating oil supplied to the hydraulic chamber 51 until the toroidal piston 43 abuts against the bottom surface of the cover 48. As a result, a force acts in the compression direction of the second spring 50 so that the spring bearing 45 and the needle valve 5 are pushed upwards by the elastic force of the second spring 50. In addition, the first spring 49 is compressed so that the outer circumferential surface of the distal end portion of the needle valve 5 moves away from the inside edge portion of the aperture 3a of the seat portion 3, and the gas injection valve is placed in a state in which the gas supply path 33 and the gas injection path 34 are in communication with each other.

Accordingly, fuel gas is supplied from the fuel gas generating apparatus to the interior of the cylinder liner of the two-stroke gas engine.

When the toroidal piston 43 and the piston extension portion 44 are rising, the air inside the space 58 is expelled to the outside of the apparatus body 42 via the atmospheric opening hole 57 and the atmospheric opening tube 28.

Moreover, when the spring bearing 45 is raised, a force acts in the compression direction of the first spring 49 so that the spring bearing 45 and the needle valve 5 become supported by the first spring 49 and the second spring 50. As a consequence, the spring bearing 45 and the needle valve 5 are affected by their own mass and by the spring loading of the first and second springs 49 and 50 so that they perform a simple harmonic oscillation and cause the needle valve 5 to move reciprocatingly in a vertical direction. As a result, the area of the flow path between the outer circumferential surface of the distal end portion of the needle valve 5 and the aperture 3a of the seat portion 3 increases and decreases in accordance with the rising and falling of the needle valve 5.

Accordingly, even if the fuel gas G is fed at a constant pressure from the fuel gas generating apparatus to the gas supply path 33, the injection pressure of the fuel gas G that is supplied via the gas injection path 34 to the interior of the cylinder liner of the two-stroke gas engine can be varied. As a result, in the interior of the cylinder liner, the mixing together of the air and the fuel gas G is accelerated, and it is possible to maintain the running of the engine efficiently and in a stable state.

While the gas injection valve is in an open state, then if the excitation of the solenoid of the electromagnetic valve 26 is interrupted, the operating oil being discharged by the pump 25 is returned to the tank 24 via the relief valve 27 without being supplied to the hydraulic chamber 51. Moreover, the hydraulic chamber 51 is in communication with the tank 24 via the operating hydraulic pressure application hole 56 and the electromagnetic valve 26. The spring bearing 45 is pushed downwards by the elastic force of the first spring 49, and the distal end portion (i.e., the bottom end portion in FIG. 1) of the needle valve 5, which is formed in a conical shape, fits inside the aperture 3 a of the seat portion 3, and the outer circumferential surface of the distal end portion of the needle valve 5 fits tightly against the inside edge portion of the aperture 3a, so that the gas injection valve is placed in a closed state in which the gas supply path 1 and the gas injection path 2 are not in communication with each other.

Accordingly, the fuel gas G is no longer supplied from the fuel gas generating apparatus to the interior of the cylinder liner of the two-stroke gas engine.

When the spring bearing 45 is falling, a force acts in the compression direction of the second spring 50 so that the piston extension portion 44 and the toroidal piston 43 are lowered by the elastic force of the second spring 50. This lowering of the toroidal piston 43 causes the hydraulic fluid from the chamber 51 to return to the tank 24 via the operating hydraulic pressure application hole 56 and the electromagnetic valve 26. Moreover, air outside the apparatus body 12 flows into the space 58 via the atmospheric opening tube 28 and the atmospheric opening hole 57.

In the gas injection valve shown in FIG. 1, because the operation of the needle valve 5 can be varied simply by switching the excitation current to the electromagnetic valve 26 between ON and OFF, injection control of the fuel gas G can be achieved by means of a simple structure. Moreover, because the needle valve 5 and the seat portion 3 do not come into mutual contact during fuel injection, the usable lifespan of these components can be considerably extended.

Furthermore, because the area of the flow path between the outer circumferential surface of the distal end portion of the needle valve 5 and the aperture 3a of the seat portion 3 increases and decreases in accordance with the rising and falling of the needle valve 5, and because, in conjunction with this, it is possible to vary the injection pressure of the fuel gas G that is supplied from the fuel gas generating apparatus to the interior of the cylinder liner of the two-stroke gas engine via the gas injection path 34, in the interior of the cylinder liner, the mixing together of the air and the fuel gas G is accelerated, and it is possible to maintain the running of the engine efficiently and in a stable state.

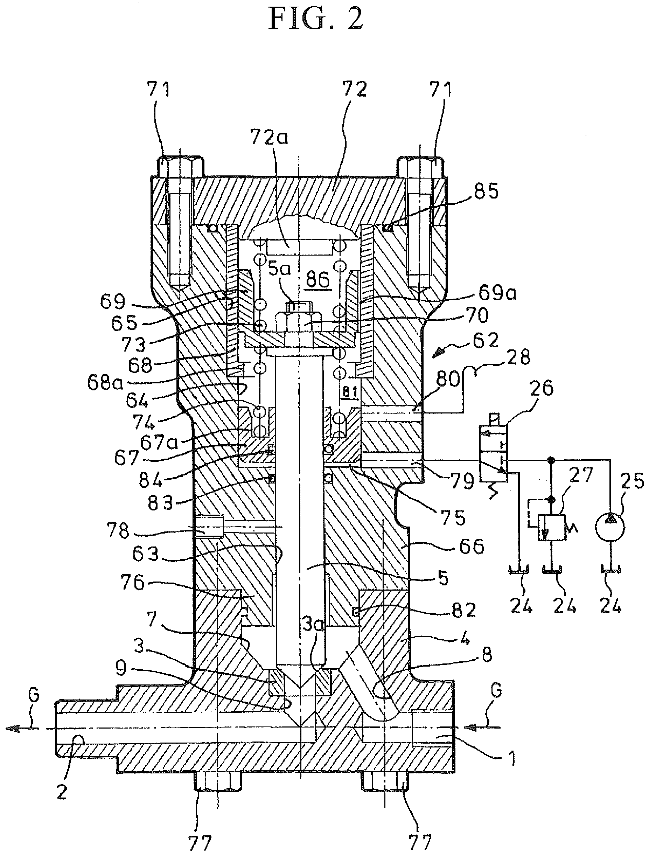

FIG. 2 shows an example of a gas injection valve of the present invention. In this drawing, portions that have the same structure as in FIG. 3 are given the same descriptive symbols as in FIG. 3 and any description thereof is omitted.

This gas injection valve is provided with a gas path component 4 that incorporates the seat portion 3, the needle valve (i.e., valve body) 5, and a valve driving apparatus 62 that, when fuel injection is halted, causes the needle valve 5 to approach the seat portion 3 such that an outer circumferential surface of the distal end portion of the needle valve 5 is able to fit firmly against an inside edge portion of the aperture 3 a of the seat portion 3, and that, when fuel is being injected, causes the needle valve 5 to retire from the seat portion 3 such that a gap is formed between the outer circumferential surface of the distal end portion of the needle valve 5 and the inside edge portion of the aperture 3 a of the seat portion 3.

The gas path component 4 and the needle valve 5 have the same structures as in the gas injection valve shown in FIG. 3, with a gas generating apparatus (not shown) being connected to an end portion on one side (i.e., the right side in FIG. 2) of the gas supply path 1, and with an end portion on the other side (i.e., the left side in FIG. 2) of the gas injection path 2 being in communication with the interior of the cylinder liner (not shown) of the two-stroke gas engine.

The valve driving apparatus 62 has an apparatus body 66, a toroidal piston 67, a stopper 68, a spring bearing 69, a nut 70, a first spring 73, and a second spring 74.

A needle valve guide hole 63 though which the needle valve 5 is inserted such that it is able to be raised and lowered is formed in a bottom portion of the apparatus body 66, while a piston guide hole 64 whose internal diameter is greater than that of the needle valve guide hole 63 is formed coaxially with the needle valve guide hole 63 in an intermediate portion in the vertical direction of the apparatus body 66. In addition, a stopper supporting hole 65 whose internal diameter is greater than that of the piston guide hole 64 is formed in a top portion of the apparatus body 66.

The toroidal piston 67 is inserted such that it is able to move up and down inside the piston guide hole 64, and is engaged from the outer side with the needle valve 5 such that it is able to move up and down.

The stopper 68 is a cylindrical component that fits in the stopper supporting hole 65, and the spring bearing 69 is inserted from above into the interior of the stopper 68 such that it is able to move up and down.

The spring bearing 69 is formed in a circular cylinder shape having one closed end, and fits from the outside around the male screw 5a of the needle valve 5 at the end surface thereof that is positioned at the bottom end of the spring bearing 69.

The nut 70 screws onto the male screw 5a of the needle valve 5, and thereby fixes the spring bearing 69 to the needle valve 5.

A cover 72 is fastened by a bolt 71 to a top end portion of the apparatus body 66, and closes off the aperture end of the stopper supporting hole 65.

The first spring 73 is housed within the apparatus body 66 so as to be positioned between the cover 72 and the spring bearing 69, and urges the spring bearing 69 and the needle valve 5 in a downward direction.

The second spring 74 is housed within the apparatus body 66 so as to be positioned between the spring bearing 69 and the toroidal piston 67, and is able to expand and contract in the axial direction of the needle valve 5.

In addition, a hydraulic chamber 75 is formed by a bottom surface of the toroidal piston 67, an internal bottom surface of the piston guide hole 64 that lies opposite the bottom surface of the toroidal piston 67, and an inner circumferential surface of the piston guide hole 64.

A top end portion of the first spring 73 engages from the outer side with a projection 72a that is provided on a bottom surface of the cover 72, while a bottom end portion of the second spring 50 fits inside a toroidal groove 67a that is formed in a top surface of the toroidal piston 67. A toroidal projection 68a that is used to restrict the rise of the toroidal piston 67 is formed on an inner circumferential surface of the bottom end portion of the stopper 68. In addition, a groove 69a that extends in a vertical direction is formed in an outer circumferential surface of the spring bearing 69.

A projecting portion 76 that protrudes downwards with the needle valve guide hole 63 at its center is formed in a bottom portion of the apparatus body 66 of the valve driving apparatus 62. The projecting portion 76 is fitted from above inside a top edge portion of an internal circumferential surface of the recessed portion 7 in the gas path component 4, and the gas path component 4 is fastened by bolts 77 to the apparatus body 66.

Moreover, a leakage gas recovery hole 78 that horizontally penetrates the apparatus body 66 from the outside in the direction of the needle valve guide hole 63, an operating hydraulic pressure application hole 79 that horizontally penetrates the apparatus body 66 from the outside in the direction of the hydraulic chamber 75, and an atmospheric opening hole 80 that horizontally penetrates the apparatus body 66 from the outside are each provided in the apparatus body 66. The atmospheric opening hole 80 communicates from the outside with a space 81 that is enclosed by the toroidal piston 67, the inner circumferential surface of the piston guide hole 64, the spring bearing 69, and the inner circumferential surface of the stopper 68 and the like. A space 86 that is enclosed by the stopper 68, the spring bearing 69, and the cover 72 and the like communicates with the space 81 via the groove 69a in the outer circumferential surface of the spring bearing 69.

Furthermore, in the same way as in the gas injection valve shown in FIG. 3, the tank 24, the pump 25, the electromagnetic valve 26, the relief valve 27, and the atmospheric opening tube 28 are attached to the valve driving apparatus 62. These components are assembled such that, when the solenoid of the electromagnetic valve 26 is excited, an operating oil discharge aperture of the pump 25 is in communication with the hydraulic chamber 75 via the operating hydraulic pressure application hole 79, and when the solenoid of the electromagnetic valve 26 is not being excited, the hydraulic chamber 75 is in communication with the tank 24 via the operating hydraulic pressure application hole 79.

In FIG. 2, the symbol 82 shows an O-ring that is interposed between an outer circumferential surface of the projecting portion 76 of the apparatus body 66 and an inner circumferential surface of the recessed portion 37 of the gas path component 4, the symbol 83 shows an O-ring that is interposed between an inner circumferential surface of the needle valve guide hole 63 of the apparatus body 66 and the outer circumferential surface of the needle valve 5, the symbol 84 shows an O-ring that is interposed between an inner circumferential surface of the toroidal piston 67 and the outer circumferential surface of the needle valve 5, and the symbol 85 shows an O-ring that is interposed between a top end surface of the apparatus body 66 and a circumferential edge portion of a bottom end surface of the cover 72.

Next, an operation of the gas injection valve shown in FIG. 2 will be described.

When the solenoid of the electromagnetic valve 26 is not being excited, the operating oil discharged by the pump 25 is not supplied to the hydraulic chamber 75, but is returned to the tank 24 via the relief valve 27. At this time, the hydraulic chamber 75 is in communication with the tank 24 via the operating hydraulic pressure application hole 79 and the electromagnetic valve 26.

The spring bearing 69 and the needle valve 5 are pushed downwards by the elastic force of the first spring 73, and the distal end portion (i.e., the bottom end portion in FIG. 2) of the needle valve 5, which is formed in a conical shape, fits inside the aperture 3a of the seat portion 3, and the outer circumferential surface of the distal end portion of the needle valve 5 fits tightly against the inside edge portion of the aperture 3a. As a result, the gas injection valve is placed in a closed state in which the gas supply path 1 and the gas injection path 2 are not in communication with each other.

Accordingly, the fuel gas G is not supplied from the fuel gas generating apparatus to the interior of the cylinder liner of the two-stroke gas engine. In addition, the spring bearing 69 compresses the second spring 74, and the toroidal piston 67 is urged downwards by the elastic force of the second spring 74.

When the solenoid of the electromagnetic valve 26 is excited, the operating oil discharged by the pump 25 is supplied to the hydraulic chamber 75 via the electromagnetic valve 26 and the operating hydraulic pressure application hole 79. The toroidal piston 67 is pushed upwards by the pressure of the operating oil supplied to the hydraulic chamber 75 until the toroidal piston 67 abuts against the toroidal projection 68a of the stopper 68. As a result, a force acts in the compression direction of the second spring 74 so that the spring bearing 69 and the needle valve 5 are pushed upwards by the elastic force of the second spring 74. In addition, the first spring 73 is compressed so that the outer circumferential surface of the distal end portion of the needle valve 5 moves away from the inside edge portion of the aperture 3a of the seat portion 3, and the gas injection valve is placed in a state in which the gas supply path 1 and the gas injection path 2 are in communication with each other.

Accordingly, the fuel gas G is supplied from the fuel gas generating apparatus to the interior of the cylinder liner of the two-stroke gas engine.

When the toroidal piston 67 is rising, the air inside the space 81 is expelled to the outside of the apparatus body 66 via the atmospheric opening hole 80 and the atmospheric opening tube 28.

Moreover, when the toroidal piston 67 is raised, the force in the compression direction of the first spring 73 acts so that the spring bearing 69 and the needle valve 5 become supported by the first spring 73 and the second spring 74. As a consequence, the spring bearing 69 and the needle valve 5 are affected by their own mass and by the spring loading of the first and second springs 73 and 74 so that they perform a simple harmonic oscillation and cause the needle valve 5 to move reciprocatingly in a vertical direction. Due to this, the area of the flow path between the outer circumferential surface of the distal end portion of the needle valve 5 and the aperture 3a of the seat portion 3 increases and decreases in accordance with the rising and falling of the needle valve 5.

Accordingly, even if the fuel gas G is fed at a constant pressure from the fuel gas generating apparatus to the gas supply path 1, the injection pressure of the fuel gas G that is supplied via the gas injection path 2 to the interior of the cylinder liner of the two-stroke gas engine can be varied. As a result, in the interior of the cylinder liner, the mixing together of the air and the fuel gas G is accelerated, and it is possible to maintain the running of the engine efficiently and in a stable state.

While the gas injection valve is in an open state, then if the excitation of the solenoid of the electromagnetic valve 26 is interrupted, the operating oil being discharged by the pump 25 is returned to the tank 24 via the relief valve 27 without being supplied to the hydraulic chamber 75. Moreover, the hydraulic chamber 75 is in communication with the tank 24 via the operating hydraulic pressure application hole 79 and the electromagnetic valve 26. The spring bearing 69 is pushed downwards by the elastic force of the first spring 73, and the distal end portion (i.e., the bottom end portion in FIG. 2) of the needle valve 5, which is formed in a conical shape, fits inside the aperture 3a of the seat portion 3, and the outer circumferential surface of the distal end portion of the needle valve 5 fits tightly against the inside edge portion of the aperture 3a, so that the gas injection valve is placed in a closed state in which the gas supply path 1 and the gas injection path 2 are not in communication with each other.

Accordingly, the fuel gas G is no longer supplied from the fuel gas generating apparatus to the interior of the cylinder liner of the two-stroke gas engine.

When the spring bearing 69 is falling, a force acts in the compression direction of the second spring 50 so that the toroidal piston 67 is lowered by the elastic force of the second spring 50. This lowering of the toroidal piston 67 causes the hydraulic oil from the chamber 75 to return to the tank 24 via the operating hydraulic pressure application hole 79 and the electromagnetic valve 26. Moreover, air outside the apparatus body 66 flows into the space 81 via the atmospheric opening tube 28 and the atmospheric opening hole 80.

In the gas injection valve shown in FIG. 2, because the needle valve 5 can be operated simply by switching the excitation current to the electromagnetic valve 26 between ON and OFF, injection control of the fuel gas G can be achieved by means of a simple structure. Moreover, because the needle valve 5 and the seat portion 3 do not come into mutual contact during fuel injection, the usable lifespan of these components can be considerably extended.

Furthermore, because the surface area of the flow path between the outer circumferential surface of the distal end portion of the needle valve 5 and the aperture 3a of the seat portion 3 increases and decreases in accordance with the rising and falling of the needle valve 5, and because it is possible to vary the injection pressure of the fuel gas G that is supplied from the fuel gas generating apparatus to the interior of the cylinder liner of the two-stroke gas engine via the gas injection path 2, in the interior of the cylinder liner, the mixing together of the air and the fuel gas G is accelerated, and it is possible to maintain the running of the engine efficiently and in a stable state.

According to the present invention, in a gas injection valve that is used in a two-stroke gas engine, it is possible to vary the injection pressure of fuel gas while the needle valve remains in an open state

### [Description of the Reference Numerals]

1 ... Gas supply path, 2 ... Gas injection path, 3 ... Seat portion, 3a ... Aperture, 4 ... Gas path component, 5 ... Needle valve (Valve body), 33 ... Gas supply path, 34 ... Gas injection path, 35 ... Gas path component, 36 ... Valve driving apparatus, 42 ... Apparatus body, 43 ... Toroidal piston, 45 ... Spring bearing, 49 ... First spring, 50 ... Second spring, 62 ... Valve driving apparatus, 66 ... Apparatus body, 67 ... Toroidal piston, 69 ... Spring bearing, 69a ... Groove, 73 ... First spring, 74 ... Second spring, G ... Fuel gas

## Claims

1. A gas injection valve comprising:
a gas flow path component (35) that comprises a gas supply path (33) along which fuel gas is supplied, and a gas injection path (34) that is able to feed fuel gas to an interior portion of a cylinder of a gas engine, and also an aperture (3 a) that located between these paths and is able to communicate with both paths;
a valve body (5) that opens and closes the aperture; and
a valve driving apparatus (36, 62) that, when fuel injection is halted, causes the valve body (5) to approach the gas path component (35) such that a distal end portion of the valve body (5) closes off the aperture (3a), and that, when fuel is being injected, causes the valve body (5) to retire from the gas path component (35) such that the distal end portion of the valve body (5) opens up the aperture (3a), wherein
the valve driving apparatus comprises:
an apparatus body (42, 66) that supports the valve body (5) such that it is able to move in both a direction in which it approaches the gas path component (35) and a direction in which it retreats from the gas path component (35);
a spring bearing (45, 69) that is attached to the valve body (5);
a piston (43, 67) that is housed in the apparatus body (42, 66) such that it is able to move in the same direction as the valve body (5), and to which fluid pressure is applied in a direction moving away from the gas path component (35);
**characterized in that** it further comprises:
a first spring (49, 73) that urges the spring bearing (45, 69) in a direction approaching the gas path component (35); and
a second spring (50, 74) that is disposed between the piston (43, 67) and the spring bearing (45, 69), and that is able to expand and contract in the direction of movement of the valve body (5);
wherein the spring bearing (45,69) is disposed between the first spring (49, 73) and the second spring (50, 74); and the arrangement is such that
when the spring bearing (45, 69) is raised, a force acts in the compression direction of the first spring (49, 73) so that the spring bearing (45, 69) and the valve body (5) become supported by both the first spring (49, 73) and the second spring (50, 74).

2. The gas injection valve according to claim 1, wherein the valve body (5) has a circular column shape, and the piston (43) is formed in a toroidal shape having the same axis as the valve body (5), and the spring bearing (45) is inserted inside the piston (43) such that it is able to slide in the axial direction of the valve body (5), and a base end portion of the valve body (5) is attached to the spring bearing (45).

3. The gas injection valve according to claim 1, wherein the valve body (5) has a circular column shape, and the piston (67) is fitted from an outer side around the valve body (5) such that it is able to slide in the axial direction of the valve body (5), and a base end portion of the valve body (5) is attached to the spring bearing (69).

## Patentansprüche

1. Gaseinspritzventil, das Folgendes umfasst:
ein Gasströmungsbahn-Bauteil (35), das eine Gaszufuhrbahn (33), entlang derer Brenngas zugeführt wird, und eine Gaseinspritzungsbahn (34), die dazu in der Lage ist, Brenngas in einen inneren Abschnitt eines Zylinders einer Gaskraftmaschine einzuspeisen, und ebenfalls eine Öffnung (3a), die zwischen diesen Bahnen angeordnet und dazu in der Lage ist, mit beiden Bahnen zu kommunizieren, umfasst,
ein Ventilgehäuse (5), das die Öffnung öffnet und schließt, und
eine Ventilantriebsvorrichtung (36, 62), die, wenn die Kraftstoffeinspritzung angehalten wird, veranlasst, dass sich das Ventilgehäuse (5) derart dem Gasströmungsbahn-Bauteil (35) annähert, dass ein distaler Endabschnitt des Ventilgehäuses (5) die Öffnung (3a) verschließt, und die, wenn Kraftstoff eingespritzt wird, veranlasst, dass sich das Ventilgehäuse (5) derart von dem Gasströmungsbahn-Bauteil (35) zurückzieht, dass der distale Endabschnitt des Ventilgehäuses (5) die Öffnung (3a) öffnet, wobei
die Ventilantriebsvorrichtung Folgendes umfasst:
ein Vorrichtungsgehäuse (42, 66), welches das Ventilgehäuse (5) derart trägt, dass es dazu in der Lage ist, sich sowohl in einer Richtung, in der es sich dem Gasströmungsbahn-Bauteil (35) annähert, als auch in einer Richtung, in der es sich von dem Gasströmungsbahn-Bauteil (35) zurückzieht, zu bewegen,
ein Federlager (45, 69), das an dem Ventilgehäuse (5) befestigt ist,
einen Kolben (43, 67), der derart in dem Vorrichtungsgehäuse (42, 66) untergebracht ist, dass er dazu in der Lage ist, sich in der gleichen Richtung zu bewegen wie das Ventilgehäuse (5), und auf den in einer Richtung, die sich von dem Gasströmungsbahn-Bauteil (35) weg bewegt, Fluiddruck angewendet wird,
**dadurch gekennzeichnet, dass** es ferner Folgendes umfasst:
eine erste Feder (49, 73), die das Federlager (45, 69) in einer Richtung, die sich dem Gasströmungsbahn-Bauteil (35) annähert, treibt, und
eine zweite Feder (50, 74), die zwischen dem Kolben (43, 67) und dem Federlager (45, 69) angeordnet ist und die dazu in der Lage ist, sich in der Bewegungsrichtung des Ventilgehäuses (5) auszudehnen und zusammenzuziehen,
wobei das Federlager (45, 69) zwischen der ersten Feder (49, 73) und der zweiten Feder (50, 74) angeordnet ist und die Anordnung derart ist, dass, wenn das Federlager (45, 69) angehoben wird, eine Kraft in der Kompressionsrichtung der ersten Feder (49, 73) wirkt, so dass das Federlager (45, 69) und das Ventilgehäuse (5) sowohl durch die erste Feder (49, 73) als auch durch die zweite Feder (50, 74) getragen werden.

2. Gaseinspritzventil nach Anspruch 1, wobei das Ventilgehäuse (5) eine kreisförmige Säulengestalt hat und der Kolben (43) in einer kreisringförmigen Gestalt geformt ist, welche die gleiche Achse hat wie das Ventilgehäuse (5), und das Federlager (45) derart innerhalb des Kolbens (43) eingesetzt ist, dass es dazu in der Lage ist, in der Axialrichtung des Ventilgehäuses (5) zu gleiten, und ein Basisendabschnitt des Ventilgehäuses (5) an dem Federlager (45) befestigt ist.

3. Gaseinspritzventil nach Anspruch 1, wobei das Ventilgehäuse (5) eine kreisförmige Säulengestalt hat und der Kolben (67) derart von einer Außenseite um das Ventilgehäuse (5) gepasst ist, dass er dazu in der Lage ist, in der Axialrichtung des Ventilgehäuses (5) zu gleiten, und ein Basisendabschnitt des Ventilgehäuses (5) an dem Federlager (69) befestigt ist.

## Revendications

1. Soupape d'injection de gaz, comprenant :
une composante de trajectoire d'écoulement de gaz (35) comprenant une trajectoire d'alimentation de gaz (33) le long de laquelle le gaz combustible est alimenté, et une trajectoire d'injection de gaz (34) capable d'amener le gaz combustible vers une partie interne d'un cylindre d'un moteur gaz, et une ouverture (3a) agencée entre ces trajectoires et capable de communiquer avec les deux trajectoires ;
un corps de soupape (5) ouvrant et fermant l'ouverture ; et
un dispositif d'entraînement de la soupape (36, 62), qui, lors de l'arrêt de l'injection de combustible, entraîne le rapprochement du corps de la soupape (5) de la composante de trajectoire de gaz (35), de sorte qu'une partie d'extrémité distale du corps de la soupape (5) ferme l'ouverture (3a), et qui, lors de l'injection de combustible, entraîne le retrait du corps de la soupape (5) de la composante de trajectoire de gaz (35), de sorte que la partie d'extrémité distale du corps de la soupape (5) ouvre l'ouverture (3a) ; dans laquelle :
le dispositif d'entraînement de la soupape comprend :
un corps du dispositif (42, 66) supportant le corps de la soupape (5) de sorte qu'il peut se déplacer dans une direction dans laquelle il se rapproche de la composante de trajectoire de gaz (35) et une direction dans laquelle il se retire de la composante de trajectoire de gaz (35) ;
un palier à ressort (45, 69) fixé sur le corps de la soupape (5) ;
un piston (43, 67) logé dans le corps du dispositif (42, 66) et pouvant se déplacer dans la même direction que le corps de la soupape (5), et auquel la pression de fluide est appliquée dans une direction allant à l'écart de la composante de trajectoire de gaz (35) ;
**caractérisée en ce qu'**elle comprend en outre :
un premier ressort (49, 73), poussant le palier à ressort (45, 69) dans une direction se rapprochant de la composante de trajectoire de gaz (35) ; et
un deuxième ressort (50, 74) agencé entre le piston (43, 67) et le palier à ressort (45, 69) et pouvant se dilater et se contracter dans la direction du déplacement du corps de soupape ;
dans laquelle le palier à ressort (45, 60) est agencé entre le premier ressort (49, 73) et le deuxième ressort (50, 74) ; l'agencement étant tel que lorsque le palier à ressort (45, 69) est soulevé, une force agit dans la direction de compression du premier ressort (49, 73), de sorte que le palier à ressort (45, 69) et le corps de la soupape (5) sont supportés par le premier ressort (49, 73) et le deuxième ressort (50, 74).

2. Soupape d'injection de gaz selon la revendication 1, dans laquelle le corps de la soupape (5) a une forme en colonne circulaire, le piston (43) étant formé en une forme toroïdale ayant le même axe que le corps de la soupape (5), le palier à ressort (45) étant inséré à l'intérieur du piston (43), de sorte à pouvoir glisser dans la direction axiale du corps de la soupape (5), et une partie d'extrémité de base du corps de la soupape (5) étant fixée sur le palier à ressort (45).

3. Soupape d'injection de gaz selon la revendication 1, dans laquelle le corps de la soupape (5) a une forme en colonne circulaire, le piston (67) étant ajusté à partir d'un côté externe autour du corps de la soupape (5), de sorte à pouvoir glisser dans la direction axiale du corps de la soupape (5), et une partie d'extrémité de base du corps de la soupape (5) étant fixée sur le palier à ressort (69).
